# FASCICULE DE BREVET EUROPEEN

(11) **EP 0 802 600 B1**
(45) Date de publication et mention de la délivrance du brevet: **31.10.2001**
(21) Numéro de dépôt: 97400653.8
(22) Date de dépôt: 24.03.1997
(51) Int. Cl.: H02G 5/06

(54) **Cable électrique à isolation gazeuse**
Gasisoliertes elektrisches Kabel
Gas insulated electric cable

(30) Priorité: 19.04.1996 FR 9604932
(43) Date de publication de la demande: 22.10.1997
(73) Titulaire: GEC ALSTHOM T & D SA, 75116 Paris (FR)
(72) Inventeur: Tixier, René, 69008 Lyon (FR); Pham, Van Doan, 69330 Meyzieu (FR)
(74) Mandataire: Gosse, Michel

(56) Documents cités:
- EP-A- 0 660 478
- DE-U- 9 316 832
- FR-A- 1 333 287
- FR-A- 2 234 689
- FR-A- 2 509 080
- US-A- 3 787 604

## Description

La présente invention concerne un câble à isolation gazeuse.

On a décrit, notamment dans la demande de brevet français n° 93 15 355, un câble triphasé à isolation gazeuse constitué de tronçons d'une centaine de mètres de longueur. Chaque tronçon est constitué par soudage d'éléments ayant une longueur d'une dizaine de mètres environ. Ces éléments sont:
- une enveloppe cylindrique en acier, résistant à la pression interne du gaz d'isolement qui est de préférence de l'azote sous une pression de l'ordre de dix bars,
- une enveloppe cylindrique en aluminium, coaxiale à l'enveloppe d'acier, et servant d'écran magnétique entre les conducteurs et l'enveloppe d'acier,
- trois conducteurs disposés à l'intérieur de l'enveloppe d'aluminium et disposés parallèlement entre eux et à l'axe des enveloppes. Ces conducteurs sont maintenus en place par des bras isolants maintenus par des arceaux métalliques.

A l'une des extrémités d'un tronçon est placé un disque métallique solidarisé à l'enveloppe d'acier; le disque est muni de trois ouvertures pour le passage de l'extrémité des conducteurs; ces derniers sont maintenus par des cônes isolants fixés au disque métallique. La liaison électrique d'un conducteur d'un tronçon donné est réalisée par engagement de l'extrémité du conducteur à l'intérieur d'un manchon métallique fixé à l'extrémité du conducteur du tronçon adjacent; le manchon est pourvu intérieurement de pièces de contact, par exemple du type accordéon. Ce contact glissant permet d'assurer le passage du courant pendant la dilatation différentielle entre les conducteurs et l'enveloppe d'un tronçon.

Pour permettre d'assurer une distance d'isolement suffisante entre les conducteurs et le disque métallique au potentiel de la terre, il est nécessaire de diminuer la section des conducteurs dans la zone de traversée des ouvertures et à l'approche de cette zone, de part et d'autre du disque. En cas de surintensité dans les conducteurs, des efforts d'attraction important entre les conducteurs apparaissent engendrant des vibrations à une fréquence double de celle du courant. Ces vibrations, accentuées par la diminution du diamètre des conducteurs à leur extrémité, entraînent des piqûres sur les contacts dont la qualité se dégrade, produisant des échauffements préjudiciables.

Un but de la présente invention est de réaliser une jonction entre conducteurs de tronçons adjacents qui ne présente pas les inconvénients mentionnés ci-dessus.

L'invention a pour objet un câble à isolation gazeuse comprenant une pluralité de tronçons reliés deux à deux, chaque tronçon comprenant trois conducteurs, l'extrémité du conducteur d'un tronçon comprenant un embout métallique s'engageant dans une portion métallique terminale cylindrique du conducteur homologue du tronçon adjacent, ladite portion terminale étant munie d'un contact intérieur coopérant avec ledit embout, caractérisé en ce qu'un manchon isolant, de longueur sensiblement égale à deux fois son diamètre, est disposé autour dudit embout et entre l'embout et la paroi intérieure de ladite portion terminale.

Ledit manchon comporte une surface cylindrique extérieure et une cavité cylindrique intérieure, les axes respectifs de ladite surface et de ladite cavité faisant entre eux un angle égal à celui que font ledit embout et ladite portion terminale.

Ledit angle est d'environ 3,2 degrés.

Ledit manchon est réalisé en un matériau isolant, résistant à une température au moins égale à 110°C et facilement usinable.

Ledit matériau isolant est le polytétrafluoroéthylène.

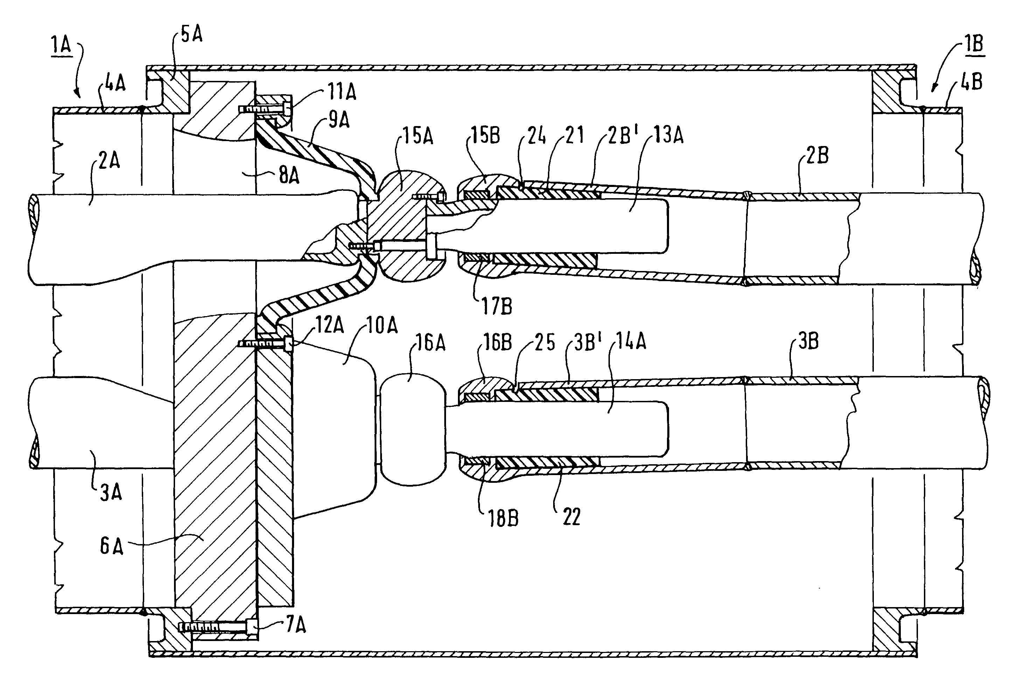

L'invention est expliquée en détail par la description d'un exemple de réalisation, en référence au dessin annexé dans lequel:
- la figure unique est une vue partielle en élévation partiellement coupée d'une portion de câble triphasé à isolation gazeuse selon l'invention, montrant les extrémités de deux tronçons adjacents.

Dans la figure, les références 1A et 1B désignent respectivement deux tronçons adjacents d'un câble triphasé à isolation gazeuse.

On distingue, pour le tronçon 1A, deux des trois conducteurs, référencés 2A et 3A, destinés à être reliés aux conducteurs homologues 2B et 3B du tronçon 1B. Ces conducteurs sont de préférence en aluminium. Dans ce qui suit, le troisième conducteur sera systématiquement omis, mais il faut bien comprendre qu'il est présent et équipé de la même manière que les deux autres. En outre, pour simplifier le dessin, l'enveloppe d'aluminium des câbles, servant d'écran magnétique entre les conducteurs et l'enveloppe en acier, n'a pas été représentée.

Le tronçon 1A comporte une enveloppe d'acier 4A, le tronçon 1B une enveloppe d'acier 4B. L'extrémité du tronçon 1A comprend une virole 5A, soudée à l'enveloppe d'acier 4A.

Un disque 6A, fixé par des vis 7A à la virole 5A, ferme l'extrémité du tronçon 1A. Le disque 6A est muni d'ouvertures transversales telle que 8A pour le passage des conducteurs. Pour respecter les distances d'isolement entre le disque 6A, qui est au potentiel de l'enveloppe extérieure 1A, donc de la terre, et les conducteurs sous tensions, les conducteurs présentent au droit des ouvertures et en amont et en aval de celles-ci, un diamètre réduit. Le support des conducteurs et l'étanchéité du tronçon 1A sont assurés par des cônes isolants tels que 9A et 10A, fixés au disque 6A par des vis telles que les vis 11A et 12A. Les conducteurs 2A et 3A traversent les cônes isolants respectifs de manière étanche et sont, en sortie des cônes, reliés respectivement à des embouts conducteurs 13A et 14A, de préférence en cuivre. Des globes pare-effluves 15A et 16A, de préférence en aluminium, assurent la régularité des équipotentielles au voisinage des cônes isolants. Ces globes sont vissés sur l'extrémité des conducteurs alors que les embouts sont vissés sur les globes. Pour respecter les distances d'isolement entre les pare-effluves, on a été obligé de desaxer les extrémités des conducteurs du tronçon 1A par rapport aux conducteurs du tronçon 1B. C'est la raison pour laquelle les extrémités des conducteurs 2B et 3B comprennent une portion terminale soudée respectivement 2B' et 3B', inclinée d'un angle de faible valeur par rapport à la direction générale des conducteurs. Dans l'exemple de la figure, la valeur de cet angle est de 3,2 degrés. Les extrémités des portions terminales 2B' et 3B' comprennent des portions renflées référencées respectivement 15B et 16B, formant pare-effluves et portant intérieurement des contacts 17B et 18B, par exemple de type "accordéon".

Les embouts 13A et 14A sont engagés respectivement à l'intérieur des portions terminales 2B' et 3B' des conducteurs 2B et 3B, et les contacts électriques sont assurés entre ces embouts et les contacts précités. Pour atténuer les vibrations éventuelles pouvant apparaître entre les pièces en contact, il est prévu, selon l'invention, de disposer autour des embouts 13A et 14A des manchons 21 et 22; ces manchons sont réalisés dans un matériau isolant, résistant à une température pouvant atteindre 110°C et facilement usinable, afin d'obtenir une tolérance dimensionnelle faible pour limiter le mouvement du contact glissant en accordéon sur toute sa circonférence. On choisit de préférence le polytétrafluoroéthylène commercialisé sous la marque déposée "Téflon". Dans l'exemple représenté dans la figure, les manchons ont une surface extérieure cylindrique, avec une cavité ayant une surface également cylindrique;les axes des surfaces cylindriques précités font entre eux un angle égal à celui que font les portions terminales 2B' et 3B' avec la direction générale des conducteurs 2B et 3B, soit, dans l'exemple représenté, 3,2degrés. Ces manchons 21 et 22 ont une longueur sensiblement égale à deux fois leur diamètre.

Les manchons 21 et 22 sont maintenus en place par poinçonnage, par exemple en trois endroits angulairement espacés de 120°, des parties terminales 2B' et 3B'. Les référence 24 et 25 indiquent les emplacements de tels poinçonnages.

L'invention est de mise en oeuvre économique et résoud parfaitement le problème posé.

L'invention est aussi applicable aux câbles électriques à isolation gazeuse monophasé.

## Revendications

1. Câble à isolation gazeuse, comprenant une pluralité de tronçons (1A, 1B) reliés deux à deux, chaque tronçon comprenant trois conducteurs(2A, 2B, ..), l'extrémité du conducteur (2A, 2B,..) d'un tronçon (1A, 1B,..) comprenant un embout métallique (13A, 14A,..) s'engageant dans une portion métallique terminale cylindrique (2B', 3B',..) du conducteur (2B,3B,..) homologue du tronçon adjacent (1B), ladite portion terminale (2B', 3B',..) étant munie d'un contact intérieur (17B, 18B,..) coopérant avec ledit embout (13A, 14A,..), **caractérisé en ce qu'**un manchon isolant (21, 22,..), de longueur sensiblement égale à deux fois son diamètre, est disposé autour dudit embout (13A, 14A,..) et entre l'embout (13A, 14A,..) et la paroi intérieure de ladite portion terminale (2B', 3B',..).

2. Câble à isolation gazeuse selon la revendication 1, **caractérisé en ce que** ledit manchon (21, 22,..) comporte une surface cylindrique extérieure et une cavité cylindrique intérieure, les axes respectifs de ladite surface et de ladite cavité faisant entre eux un angle égal à celui que font ledit embout (13A, 14A,..) et ladite portion terminale (2B', 3B',..).

3. Câble à isolation gazeuse selon la revendication 2, **caractérisé en ce que** ledit angle est d'environ 3,2 degrés.

4. Câble selon l'une des revendications 1 et 2, **caractérisé en ce que** ledit manchon (13A, 14A,..) est réalisé en un matériau isolant, résistant à une température au moins égale à 110°C et facilement usinable.

5. Câble selon la revendication 4, **caractérisé en ce que** ledit matériau isolant est le polytétrafluoroéthylène.

## Patentansprüche

1. Gasisoliertes Kabel aus einer Vielzahl miteinander verbundener Abschnitte (1A, 1B), von denen jeder drei Leiter (2A, 2B, ...) umfasst, wobei das Ende des Leiters (2A, 2B, ...) eines Abschnitts (1A, 1B, ...) ein metallisches Anschlussstück (13A, 14A, ...) aufweist, das in einen zylindrischen metallischen Endabschnitt (2B', 3B', ...) des homologen Leiters (2B, 3B, ...) des angrenzenden Abschnitts (1B) eingreift, und der Endabschnitt (2B', 3B', ...) mit einem inneren Kontakt (17B, 18B, ...) versehen ist, der mit dem Anschlussstück (13A, 14A, ...) zusammenwirkt,
**dadurch gekennzeichnet, dass** eine isolierende Muffe (21, 22, ...) mit einer Länge, die im wesentlichen das zweifache ihres Durchmessers beträgt, um das Anschlussstück (13A, 14A, ...) und zwischen dem Anschlussstück (13A, 14A, ...) und der Innenwand des Endabschnitts (2B', 3B', ...) angeordnet ist.

2. Gasisoliertes Kabel nach Anspruch 1,
**dadurch gekennzeichnet, dass** die Muffe (21, 22, ...) eine äußere zylindrische Oberfläche und einen inneren zylindrischen Hohlraum aufweist, wobei die jeweiligen Achsen der Oberfläche und des Hohlraums untereinander einen Winkel bilden, der zu jenem gleich ist, den das Anschlusstück (13A, 14A, ...) und der Endabschnitt (2B', 3B', ...) bilden.

3. Gasisoliertes Kabel nach Anspruch 2,
**dadurch gekennzeichnet, dass** der Winkel ungefähr 3,2 Grad beträgt.

4. Kabel nach einem der Ansprüche 1 und 2,
**dadurch gekennzeichnet, dass** die Muffe (13A, 14A, ...) aus einem isolierenden Material gefertigt ist, das einer Temperatur von wenigstens 110°C standhält und leicht zu verarbeiten ist.

5. Kabel nach Anspruch 4,
**dadurch gekennzeichnet, dass** das isolierende Material Polytetrafluorethylen ist.

## Claims

1. A gas-insulated cable comprising a plurality of lengths (1A, 1B) connected end to end, each length containing three conductors (2A, 2B, ...) with the ends of the conductors (2A, 2B, ...) of a length (1A, 1B, ...) having respective metal endpieces (13A, 14a, ...) engaging in respective cylindrical terminal metal portions (2B', 3B', ...) of the corresponding conductors (2B, 3B, ...) of the adjacent length (1B), said terminal portions (2B', 3B', ...) being provided with respective internal contacts (17b, 18b, ...) co-operating with said endpieces (13A, 14A, ...), the cable being **characterized in that** a respective insulating sleeve (21, 22, ...) of length substantially equal to twice its diameter is disposed around each of said endpieces (13A, 14A, ...) and between the endpiece (13A, 14A, ...) and the inside wall of said terminal portion (2B', 3B', ...).

2. A gas-insulated cable according to claim 1, **characterized in that** said sleeve (21, 22, ...) has a cylindrical outside surface and a cylindrical inside bore, the respective axes of said outside surface and said bore being at an angle to each other which is equal to the angle between said endpiece (13A, 14A, ...) and said terminal portion (2B', 3B', ...).

3. A gas-insulated cable according to claim 2, **characterized in that** said angle is about 3.2 degrees.

4. A cable according to claim 1 or 2, **characterized in that** said sleeve (13A, 14A, ...) is made of an insulating material, that withstands a temperature of not less than 110°C, and that is easily machined.

5. A cable according to claim 4, **characterized in that** said insulating material is polytetrafluoroethylene.
